# EUROPEAN PATENT APPLICATION

(11) **EP 2 584 225 A1**
(43) Date of publication of application: **24.04.2013**
(21) Application number: 12188481.1
(22) Date of filing: 15.10.2012
(51) Int. Cl.: F16H 55/44, F16C 13/00, F16F 15/126

(54) **Pulley and pulley device**

(30) Priority: 20.10.2011 JP 2011230547; 20.10.2011 JP 2011230384
(71) Applicant: JTEKT CORPORATION, Osaka-shi Osaka 542-8502 (JP)
(72) Inventor: Hiraoka, Hironori, Osaka-shi, Osaka 542-8502 (JP); Ueno, Hiroshi, Osaka-shi, Osaka 542-8502 (JP); Hamada, Kazuki, Osaka-shi, Osaka 542-8502 (JP); Usuki, Isao, Osaka-shi, Osaka 542-8502 (JP)
(74) Representative: TBK

(57) **Abstract**

A pulley (P) includes a pair of pulley portions (1) that are arranged axially next to each other and oriented in opposite directions. Each of the pulley portions has: an inner cylindrical portion (11); an outer cylindrical portion (12) that is arranged concentrically with the inner cylindrical portion and that has an outer periphery around which a belt (3) is wound; and an annular portion (13) that connects the inner cylindrical portion and the outer cylindrical portion to each other. First side faces of the annular portions of the pulley portions are arranged so as to axially face each other with an axial vibration absorbing member (4), which absorbs axial vibrations of the annular portions, interposed between the first side faces.

## Description

### BACKGROUND OF THE INVENTION

### 1. Field of the Invention

The invention relates to a pulley and pulley device that are used in, for example, an auxiliary of an engine of an automobile.

### 2. Description of Related Art

In an automobile, a belt transmission system that transmits the torque of an engine to an auxiliary, such as an alternator, includes a pulley that guides a belt, such as a tensioner pulley or an idler pulley. As this type of pulley, there is a pulley that includes a pair of pulley portions (annular plates) arranged on the outer periphery of a rolling bearing so as to be axially next to each other and oriented in opposite directions (for example, see FIG. 4 in Japanese Utility Model Application Publication No. 61-20957 (JP 61-20957 U)).

The pulley portions described in JP 61-20957 U each include an inner cylindrical portion, an outer cylindrical portion and an annular portion. Each inner cylindrical portion is fitted onto an outer ring of the rolling bearing. A belt is wound around the outer periphery of outer cylindrical portion. Each annular portion connects the inner cylindrical portion and the outer cylindrical portion to each other. The inner cylindrical portion, the outer cylindrical portion and the annular portion are formed, as a single piece member, by pressing a single metal sheet into a U-shape in cross section. The annular portions of the pulley portions are fixed to each other by, for example, a rivet with one side faces of the annular portions axially facing each other.

In the pulley described in JP 61-20957 U, a clearance may be formed between the one side faces of the annular portions arranged so as to axially face each other due to, for example, the processing accuracy of the metal sheets that form the pulley portions. If such a clearance is formed, the annular portions vibrate during rotation of the pulley and abnormal noise is thus generated.

### SUMMARY OF THE INVENTION

It is an object of the invention to provide a pulley and pulley device with which generation of abnormal noise is effectively suppressed.

An aspect of the invention relates to a pulley that includes a pair of pulley portions that are arranged axially next to each other and oriented in opposite directions. Each of the pulley portions has: an inner cylindrical portion that has an inner periphery having a fitting face to which a cylindrical member is fitted; an outer cylindrical portion that is arranged concentrically with the inner cylindrical portion and that has an outer periphery around which a belt is wound; and an annular portion that connects the inner cylindrical portion and the outer cylindrical portion to each other. One side faces of the annular portions of the pulley portions are arranged so as to axially face each other. The pulley further comprises an axial vibration absorbing member that is interposed between the one side faces of the annular portions of the pulley portions, and that absorbs axial vibrations of the annular portions.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a front view that shows a pulley device according to a first embodiment of the invention;
FIG. 2 is a sectional view taken along the line A-A in FIG. 1;
FIG. 3 is a sectional view taken along the line B-B in FIG. 1;
FIG. 4 is a side sectional view that shows a pulley device according to a second embodiment of the invention;
FIG. 5 is a front view that shows a pulley device according to a third embodiment of the invention;
FIG. 6 is a sectional view taken along the line A-A in FIG. 5;
FIG. 7 is an enlarged sectional view of main portions in FIG. 6; and
FIG. 8 is a side sectional view that shows a pulley device according to a fourth embodiment of the invention.

### DETAILED DESCRIPTION OF EMBODIMENTS

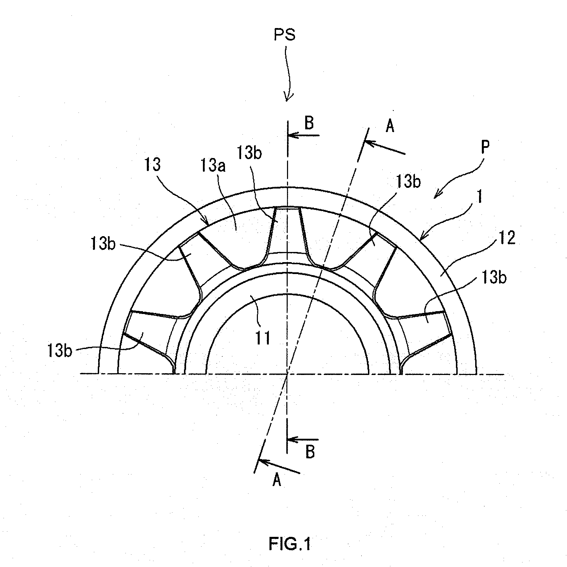

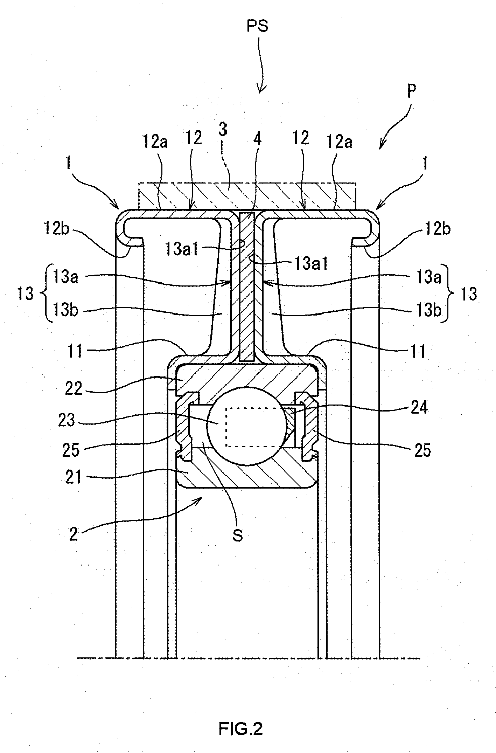

Hereinafter, a pulley and a pulley device according to each embodiment of the invention will be described in detail with reference to the accompanying drawings. FIG. 1 is a front view that shows a pulley device PS according to a first embodiment of the invention. FIG. 2 is a sectional view taken along the line A-A in FIG. 1. In FIG. 2, the pulley device PS is formed of a rolling bearing 2 and a pulley P. The pulley P is fitted to the outer periphery of the rolling bearing 2. In the pulley device PS, a belt 3 is wound around the outer periphery of the pulley P.

The rolling bearing 2 is a radial ball bearing that includes an inner ring 21, an outer ring 22, a plurality of balls (rolling elements) 23, an annular cage 24 and a pair of seal members 25. The outer ring 22 is arranged concentrically with the inner ring 21. The balls 23 are rollably arranged between the inner ring 21 and the outer ring 22. The cage 24 retains the balls 23 at predetermined intervals in the circumferential direction. The seal members 25 seal an annular space S between the inner ring 21 and the outer ring 22 at respective axially outer sides. A shaft (not shown) is fitted to the inner periphery of the inner ring 21. The shaft and the pulley P are rotatable relative to each other via the rolling bearing 2.

The pulley P includes a pair of pulley portions 1 that are arranged axially next to each other so as to be oriented in opposite directions. Each of the pulley portions 1 has an inner cylindrical portion 11, an outer cylindrical portion 12 and an annular portion 13. The inner cylindrical portion 11 is arranged radially outward of the outer ring (cylindrical member) 22. The outer cylindrical portion 12 is arranged concentrically with the inner cylindrical portion 11 and radially outward of the inner cylindrical portion 11. The annular portion 13 is arranged between the inner cylindrical portion 11 and the outer cylindrical portion 12. The inner cylindrical portion 11, the outer cylindrical portion 12 and the annular portion 13 are formed as a single-piece member by pressing (deep drawing) a single metal sheet made of stainless steel. The thickness of the metal sheet is set to 1.0 mm or smaller such that the thickness is smaller than or equal to about 50% of the thickness of a metal sheet in related art (about 1.6 mm to 2.0 mm). The inner cylindrical portions 11 of the pulley portions 1 are respectively fixedly fitted onto the outer ring 22 from respective axially outer sides of the outer ring 22.

A guide surface 12a is formed on the outer periphery of each outer cylindrical portion 12. The guide surfaces 12a guide the belt 3 that has been wound around each outer cylindrical portion 12. In addition, each of the outer cylindrical portions 12 has a turned-back portion 12b at its axially outer end portion. Each turned-back portion 12b is formed by bending the axially outer end portion of the outer cylindrical portion 12 radially inward into an arcuate shape. The turned-back portions 12b function as reinforcement portions that prevent deformation of the axially outer end portions of the outer cylindrical portions 12. Note that the turned-back portions 12b are bent in an arcuate shape; instead, the turned-back portions 12b may be bent radially inward at a right angle.

Each annular portion 13 connects the inner cylindrical portion 11 and the outer cylindrical portion 12 to each other at its axially inner end portion. As shown in FIG. 1 and FIG. 2, each annular portion 13 has an annular body portion 13a and a plurality of rib portions 13b. The rib portions 13b are formed at predetermined intervals in the circumferential direction, on the axially outer side of each annular body portion 13a. The annular body portions 13a of the pulley portions 1 are fixed to each other by, for example, a rivet (not shown) with axially inner side faces (one side faces) 13a1 of the annular body portions 13a arranged so as to axially face each other via an axial vibration absorbing member 4 (described later).

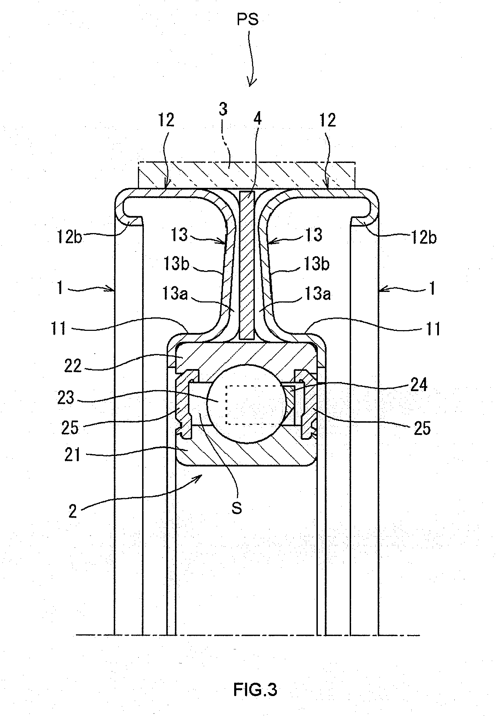

FIG. 3 is a sectional view that is taken along the line B-B in FIG. 1. In FIG. 2 and FIG. 3, the rib portions 13b are used to reinforce the annular portions 13, and are formed to protrude axially outward from the annular body portions 13a. More specifically, each rib portion 13b is formed such that its axial width gradually increases from its radially outer end toward its radially inner end.

The pulley P further includes the axial vibration absorbing member 4 that is interposed between the annular portions 13 of the pulley portions 1. The axial vibration absorbing member 4 is used to absorb axial vibrations of the annular portions 13. The axial vibration absorbing member 4 is formed in an annular shape, and is made of an elastomeric material, such as rubber. In addition, the axial vibration absorbing member 4 is fixed to the annular portions 13 by the rivet, with the axial vibration absorbing member 4 in plane contact with the axially inner side faces of the annular body portions 13a of the annular portions 13. The inner diameter of the axial vibration absorbing member 4 is larger than the inner diameter of each inner cylindrical portion 11 so that the axial vibration absorbing member 4 does not contact the outer ring 22 of the rolling bearing 2. In addition, the outer diameter of the axial vibration absorbing member 4 is smaller than the outer diameter of each outer cylindrical portion 12 so that the axial vibration absorbing member 4 does not contact the belt 3.

With the pulley P and the pulley device PS according to the first embodiment of the invention, when the annular portions 13 of the pulley portions 1 axially vibrate, the axial vibration absorbing member 4 absorbs the vibrations. Thus, it is possible to suppress axial vibrations of the annular portions 13 during rotation of the belt 3. Accordingly, it is possible to effectively suppress generation of abnormal noise due to vibrations of the annular portions 13. Note that "axial vibrations" include not only vibrations only in the axial direction but also vibrations caused by the axial component force of vibrations in a direction tilted with respect to the axial direction.

In addition, it is possible to ensure the stiffness of the pulley portions 1 with the use of the turned-back portions 12b of the outer cylindrical portions 12 of the pulley portions 1 and the rib portions 13b of the annular portions 13 of the pulley portions 1. Therefore, it is possible to reduce the thickness of the metal sheet from which the pulley portions 1 are formed. As a result, it is possible to reduce the weight of the pulley P, and to improve fuel economy performance of an engine. In the first embodiment, by setting the thickness of the metal sheet to 1.0 mm or smaller as described above, it is possible to reduce the total weight of the pulley P and rolling bearing 2 by approximately 80%, as compared with the total weight of the conventional pulley and rolling bearing. Furthermore, the inner cylindrical portion 11, outer cylindrical portion 12 and annular portion 13 of each of the pulley portions 1 are formed of the metal sheet made of stainless steel that has excellent rust resistance. Therefore, it is not necessary to apply rust prevention surface treatment to the metal sheet. As a result, it is possible to reduce manufacturing cost.

According to a second embodiment of the invention, in the pulley device PS according to the first embodiment, the pulley P further includes a radial vibration absorbing member 5. The radial vibration absorbing member 5 is interposed between the outer ring 22 of the rolling bearing 2 and the inner cylindrical portions 11 of the pulley portions 1. In the following description on the second embodiment, the same configuration as that in the first embodiment is omitted.

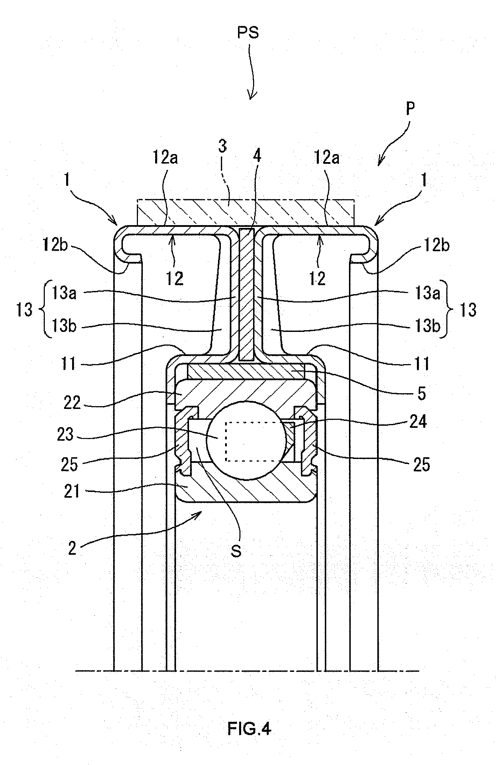

FIG. 4 is a side sectional view that shows the pulley device PS. The pulley P installed in the pulley device PS includes the radial vibration absorbing member 5. The radial vibration absorbing member 5 is interposed between the outer ring 22 of the rolling bearing 2 and the inner cylindrical portions 11 of the pulley portions 1. The radial vibration absorbing member 5 is used to absorb radial vibrations of the inner cylindrical portions 11. The radial vibration absorbing member 5 is formed in a cylindrical shape, and is made of an elastomeric material, such as rubber. The inner periphery of the radial vibration absorbing member 5 is in plane contact with the outer periphery of the outer ring 22. The outer periphery of the radial vibration absorbing member 5 is in plane contact with the inner peripheries (fitting faces) of the inner cylindrical portions 11 of the pulley portions 1. Note that the radial vibration absorbing member 5 is formed separately from the axial vibration absorbing member 4; instead, the radial vibration absorbing member 5 may be integrally formed with the axial vibration absorbing member 4.

With the pulley P and the pulley device PS according to the present embodiment as well, the axial vibration absorbing member 4 suppresses axial vibrations of the annular portions 13 during rotation of the belt 3. Thus, it is possible to effectively suppress generation of abnormal noise due to vibrations of the annular portions 13. In addition, when one of the inner cylindrical portions 11 radially vibrates due to formation of a clearance between the outer ring 22 of the rolling bearing 2 and the one of the inner cylindrical portions 11 of the pulley portions 1, the radial vibration absorbing member 5 absorbs the vibrations. Thus, it is possible to suppress radial vibrations of each inner cylindrical portion 11 during rotation of the belt 3. Therefore, it is possible to effectively suppress generation of abnormal noise due to vibrations of each inner cylindrical portion 11. Note that the "radial vibrations" include not only vibrations only in the radial direction but also vibrations caused by the radial component force of vibrations in a direction tilted with respect to the radial direction.

According to a third embodiment of the invention, the annular space S of the rolling bearing 2 is sealed by cover portions 14 and seal lip portions 15 instead of the seal members 25 that seal the annular space S in the first embodiment. In the following description on the third embodiment, the same configuration as that in the first embodiment is omitted.

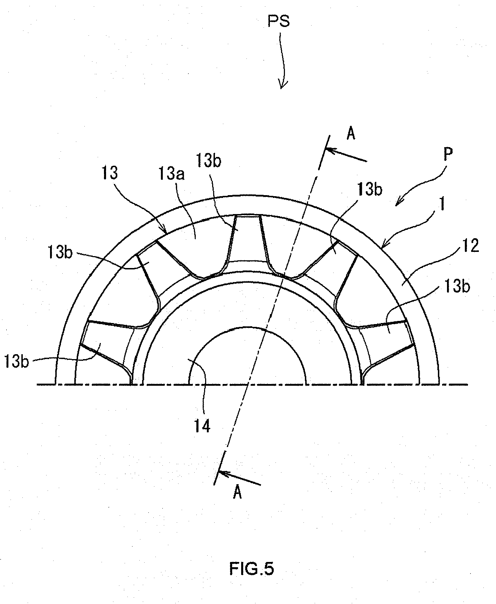

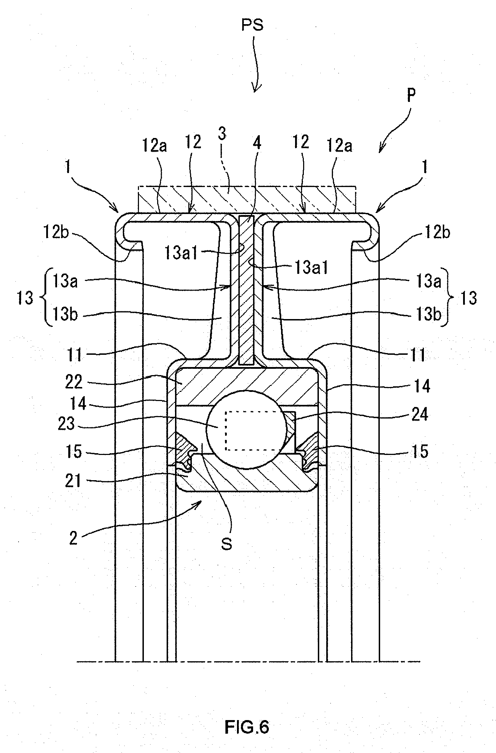

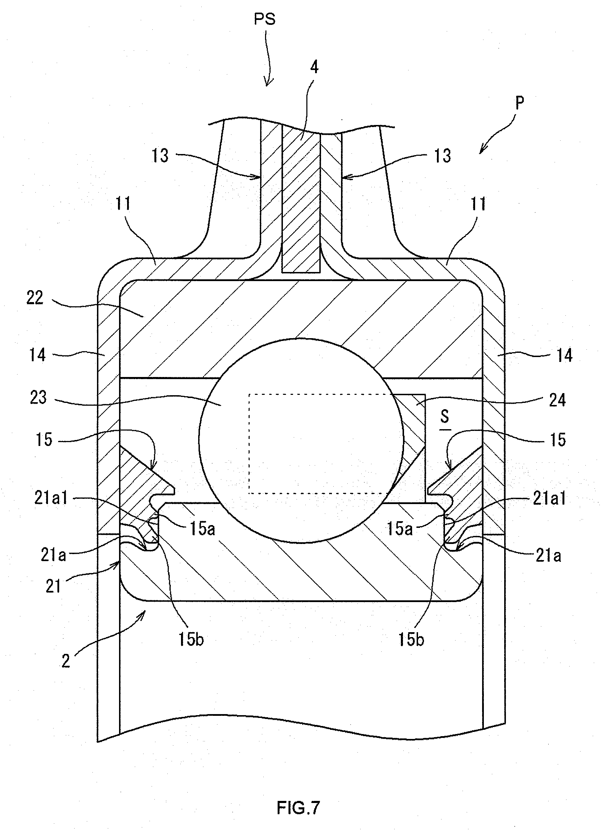

FIG. 5 is a front view that shows a pulley device. FIG. 6 is a sectional view taken along the line A-A in FIG. 5. FIG. 7 is an enlarged sectional view of main portions in FIG. 6. The rolling bearing 2 includes the cover portions 14 and the seal lip portions 15 to seal the annular space S between the inner ring 21 and the outer ring 22 at the axially outer sides of the annular space S.

The cover portions 14 extend radially inward from the axially outer end portions of the inner cylindrical portions 11, and are formed in an annular shape so as to cover the axially outer sides of the annular space S. The cover portion 14, the inner cylindrical portion 11, the outer cylindrical portion 12 and the annular portion 13 are formed as a single-piece member by pressing (deep drawing) a single metal sheet made of stainless steel.

The seal lip portions 15 each are formed in an annular shape and made of an elastic material, such as rubber, and are bonded through cure adhesion to respective axially inner side faces of the inner peripheral end portions of the cover portions 14. Each seal lip portion 15 has a first lip portion 15a and a second lip portion 15b. Each first lip portion 15a extends axially inward. Each second lip portion 15b extends axially inward, at a position radially inward of the first lip portion 15a. The first lip portion 15a and the second lip portion 15b are in slidable contact with a side face 21a1 of a seal groove 21a formed in the axially outward portion of the outer peripheral side of the inner ring 21. Thus, the annular space S between the inner ring 21 and the outer ring 22 is sealed at the axially outer sides of the annular space S. Therefore, it is possible to prevent entry of foreign matter into the inside of the bearing, and it is possible to prevent leakage of lubricant, such as grease, inside the bearing to the outside of the bearing.

With the pulley P and the pulley device PS according to the present embodiment, the same operations and advantageous effects as those in the first embodiment are obtained.

In addition, the cover portions 14 cover respective axially outer sides of the annular space S between the inner ring 21 and the outer ring 22. Because the seal lip portions 15 are in sliding contact with the outer peripheral side portions of the inner ring 21, it is possible to seal the respective axially outer sides of the annular space S with the cover portions 14 and the seal lip portions 15 by fitting the pulley P to the rolling bearing 2. Thus, it is not necessary to fit a pair of seal members for sealing respective axially outer sides of the annular space S. Therefore, it is possible to easily perform a work for assembling the pulley device PS. As a result, it is possible to improve the manufacturing efficiency of the pulley device PS. In addition, because a pair of seal members is no longer necessary, it is possible to simplify the structure of the pulley device PS.

The inner cylindrical portion 11, the outer cylindrical portion 12, the annular portion 13 and the cover portion 14 are formed by pressing a single metal sheet. Therefore, it is not necessary to individually assemble these inner cylindrical portion 11, outer cylindrical portion 12, annular portion 13 and cover portion 14. As a result, it is possible to further easily perform an assembling work.

According to a fourth embodiment of the invention, in the pulley device PS according to the third embodiment, the pulley P further includes the radial vibration absorbing member 5 that is interposed between the outer ring 22 of the rolling bearing 2 and the inner cylindrical portions 11 of the pulley portions 1. In the following description on the fourth embodiment, the same configuration as that in the third embodiment is omitted.

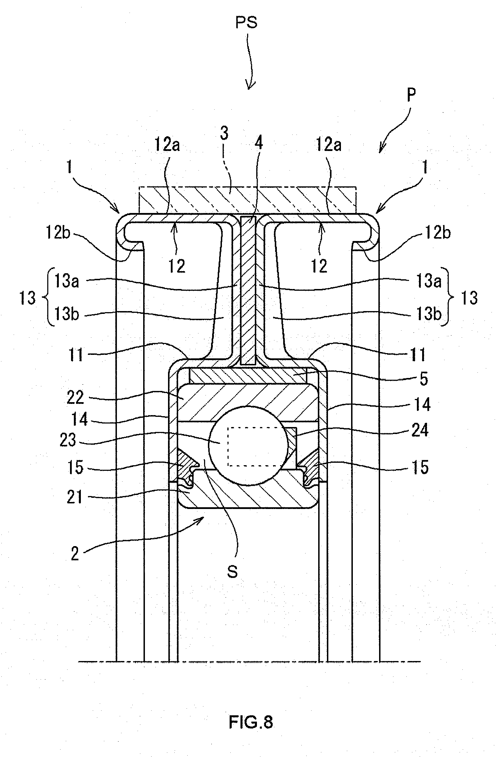

FIG. 8 is a side sectional view that shows the pulley device PS. The pulley P installed in the pulley device PS includes the radial vibration absorbing member 5 that is interposed between the outer ring 22 of the rolling bearing 2 and the inner cylindrical portions 11 of the pulley portions 1. The radial vibration absorbing member 5 is used to absorb radial vibrations of the inner cylindrical portions 11. The radial vibration absorbing member 5 is formed in a cylindrical shape and made of an elastomeric material, such as rubber. The inner periphery of the radial vibration absorbing member 5 is in plane contact with the outer periphery of the outer ring 22. The outer periphery of the radial vibration absorbing member 5 is in plane contact with the inner peripheries (fitting faces) of the inner cylindrical portions 11 of the pulley portions 1. Note that the radial vibration absorbing member 5 is formed separately from the axial vibration absorbing member 4; instead, the radial vibration absorbing member 5 may be integrally formed with the axial vibration absorbing member 4.

With the pulley P and the pulley device PS according to the present embodiment, the same operations and advantageous effects as those in the second and third embodiments are obtained.

Note that the invention is not limited to the above-described embodiments, and may be modified as needed. For example, in the above-described embodiments, the single axial vibration absorbing member is fixed between the annular portions. Alternatively, the axial vibration absorbing member may be split into two in the axial direction (in the thickness direction) and these two axial vibration absorbing members may be fixed to the respective annular portions.

In the above-described embodiments, the metal sheet from which the portions of each pulley portion are formed may be made of cold-rolled steel, such as SPCC, instead of stainless steel.

In the first and second embodiments, the pulley is fitted to the outer periphery of the rolling bearing. Alternatively, the pulley may be fitted to the outer periphery of a boss that is directly fixed to a shaft.

In the third and fourth embodiments, the inner cylindrical portion, the outer cylindrical portion, the annular portion and the cover portion, which are a plurality of elements, all are formed as a single-piece member. Alternatively, at least one element may be separately formed from the other elements.

With the pulley and the pulley device according to the invention, it is possible to effectively suppress generation of abnormal noise due to vibrations of the annular portions.
A pulley includes a pair of pulley portions that are arranged axially next to each other and oriented in opposite directions. Each of the pulley portions has: an inner cylindrical portion; an outer cylindrical portion that is arranged concentrically with the inner cylindrical portion and that has an outer periphery around which a belt is wound; and an annular portion that connects the inner cylindrical portion and the outer cylindrical portion to each other. One side faces of the annular portions of the pulley portions are arranged so as to axially face each other with an axial vibration absorbing member, which absorbs axial vibrations of the annular portions, interposed between the one side faces.

## Claims

1. A pulley, comprising:
a pair of pulley portions that are arranged axially next to each other and oriented in opposite directions, wherein
each of the pulley portions has: an inner cylindrical portion that has an inner periphery having a fitting face to which a cylindrical member is fitted; an outer cylindrical portion that is arranged concentrically with the inner cylindrical portion and that has an outer periphery around which a belt is wound; and an annular portion that connects the inner cylindrical portion and the outer cylindrical portion to each other,
one side faces of the annular portions of the pulley portions are arranged so as to axially face each other, and
the pulley further comprises an axial vibration absorbing member that is interposed between the one side faces of the annular portions of the pulley portions, and that absorbs axial vibrations of the annular portions.

2. The pulley according to claim 1, further comprising:
a radial vibration absorbing member that is interposed between the cylindrical member and the fitting faces of the inner cylindrical portions, and that absorbs radial vibrations of the inner cylindrical portions.

3. A pulley device, comprising:
a rolling bearing that includes an inner ring, an outer ring and a plurality of rolling elements; and
the pulley according to claim 1 or 2, which is fitted to an outer periphery of the outer ring, wherein
the rolling bearing further includes: annular cover portions that cover respective axially outer sides of an annular space formed between the inner ring and the outer ring; and annular seal lip portions that are attached to inner peripheral end portions of the cover portions and that are in sliding contact with an outer peripheral portions of the inner ring, and
the cover portions are formed so as to extend radially inward from axially outer end portions of the inner cylindrical portions.

4. The pulley device according to claim 3, wherein the inner cylindrical portion, the outer cylindrical portion, the annular portion and the cover portion are formed as a single-piece member by pressing a single metal sheet.
